Europäisches Patentamt

European Patent Office

Office européen des brevets

(11) Publication number: **0 028 242**
**B1**

## EUROPEAN PATENT SPECIFICATION

(45) Date of publication of patent specification: **25.09.85**

(51) Int. Cl.⁴: **G 06 K 7/10**

(21) Application number: **80900971.5**

(22) Date of filing: **07.05.80**

(86) International application number:
**PCT/US80/00542**

(87) International publication number:
**WO 80/02614 27.11.80 Gazette 80/27**

(54) **CODE SENSING SYSTEM.**

(30) Priority: **14.05.79 US 39002**

(43) Date of publication of application:
**13.05.81 Bulletin 81/19**

(45) Publication of the grant of the patent:
**25.09.85 Bulletin 85/39**

(84) Designated Contracting States:
**DE FR GB**

(56) References cited:
**US-A-3 211 470**
**US-A-3 220 301**
**US-A-3 248 030**
**US-A-3 409 760**
**US-A-3 418 456**
**US-A-3 467 819**
**US-A-3 639 730**
**US-A-3 895 394**
**US-A-3 898 434**
**US-A-3 951 251**

(73) Proprietor: **NCR Corporation**
**World Headquarters**
**Dayton, Ohio 45479 (US)**

(72) Inventor: **PASSER, Barry E.**
**Apt. 1 301 West Green Street**
**Ithaca, NY 14850 (US)**
Inventor: **SCULLEY, George A.**
**1401 Tracy Street**
**Endicott, NY 13760 (US)**

(74) Representative: **Robinson, Robert George**
**International Patent Department NCR Limited**
**206 Marylebone Road**
**London NW1 6LY (GB)**

Courier Press, Leamington Spa, England.

# Description

This invention relates to a code sensing system.

## Background art

The use of bar code symbols on labels or articles as a means for acquiring data at a point of sale is well-known. In reading these bar code labels, it is necessary to provide clock pulses or other type of synchronizing signal in order that the information be properly entered from a sensing device to a utilization device. It is further necessary to provide an accurate time relationship between the movement of the sensing device with respect to the bar code symbols and the clock pulses in order for the information received to be accurately decoded. In particular, problems have been experienced with prior art code sensing systems in that when the movement between the sensing device and the bar code symbols is intermittent the systems have been found not to operate satisfactorily.

To meet these requirements, a prior code sensing system is disclosed in US—A—3409760, including a bar code label carrying code symbols incorporating a plurality of symbols of a first type and an end symbol of a second type, each of these symbols including clock elements forming part of a clocking track and the symbols of the first type including character representing code elements forming part of a data track. The end symbol includes a start mark which is displaced from the data and clocking tracks. The clock elements of each symbol are formed by an array of parallel bars of equal widths and the code elements of each symbol of the first type are formed by an array of parallel bars of varying widths, alternate bars of each array being of different reflectivities. The symbols are arranged in succession in a circular manner, and a hand held label reader, when positioned over the label, causes three sensors to rotate in circular paths to sense the data track, clocking track and start mark. When the start mark is sensed by one sensor, storage devices in the reader are conditioned for storing electrical data signals generated subsequently by a sensor sensing the data track. The data signals are entered into the storage devices under the control of electrical clocking signals generated by a sensor sensing the clocking track. After a complete revolution, the start mark is sensed again to inhibit the storage devices during subsequent rotation of the sensors. In this prior art arrangement the sensors are moved, and no means are provided for driving the label past the sensors.

## Disclosure of the invention

It is one object of the invention to provide a low cost code sensing system including means for driving a record member carrying code symbols past sensing means for sensing said symbols, wherein the record member may be intermittently driven past said sensing means. It is a further object of the invention to provide an information bearing member suitable for use in such system.

According to one aspect of the present invention there is provided a code sensing system comprising a record member carrying code symbols incorporating a plurality of symbols of a first type and an end symbol of a second type, each of these symbols including clock elements forming part of a clocking track and the symbols of the first type including character representing code elements forming part of a data track, and sensing means for sensing said data track and said clocking track and generating first electrical signals representing said data track and second electrical signals representing said clocking track, characterized in that the end symbol of the second type also consists of character representing code elements and said clock elements, said system being further characterized by driving means for driving said record member past said sensing means, and logic means operative to disable said driving means in response to the sensing of said character representing code elements of said end symbol by said sensing means.

According to another aspect of the present invention there is provided an information bearing member carrying a row of code symbols adapted to be scanned by energy applied thereto, said row comprising a plurality of first code symbols and a second code symbol at one end of the row, each of these symbols comprising a first array of parallel bars of varying widths and a second array of parallel bars of equal widths in which alternate bars of each array are of different reflectivities, characterized in that the first and last bars of said first array of each of said first symbols are always of the same reflectivity and the first and last bars of said first array of said second symbol are of different reflectivities.

Since in accordance with the invention, the driving means is disabled with the sensing of the last symbol in the row of symbols, there is no necessity for providing a separate timing mark and separate sensor for controlling the sensing operation. Moreover, a code sensing system in accordance with the invention will operate satisfactorily even when the record member is intermittently driven.

## Brief description of the drawings

One embodiment of the invention will now be described by way of example with reference to the accompanying drawings, in which:—

Figure 1 is a graphic representation of bar code symbols of a first type for use with a code sensing system in accordance with the present invention, their associated numerical values being indicated;

Figure 2 is a graphic representation of bar code symbols of a second type for use with a code sensing system in accordance with the present invention, their associated numerical values being indicated;

Figure 3 is a plan view of a record member on which is located a bar code label;

Figure 4 is a side view of a portion of the printing station of a data terminal device used in a code sensing system in accordance with the present invention, in which the record member of Figure 3 is shown positioned adjacent a sensing means;

Figure 5 is a table showing the code structure of the bar code symbols shown in Figures 1 and 2;

Figure 6 is a simplified block diagram of the sensing and motor control circuits of the terminal device;

Figures 7A and 7B taken together are a more detailed schematic diagram of the circuits of Figure 6; and

Figures 8A and 8B taken together show a plurality of waveforms illustrating the operation of the circuits shown in Figure 6 and Figures 7A and 7B.

Best mode for carrying out the invention

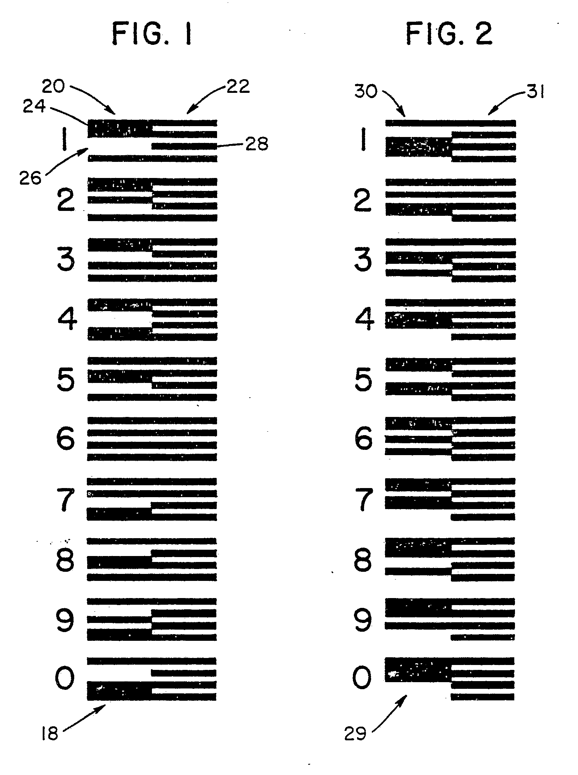

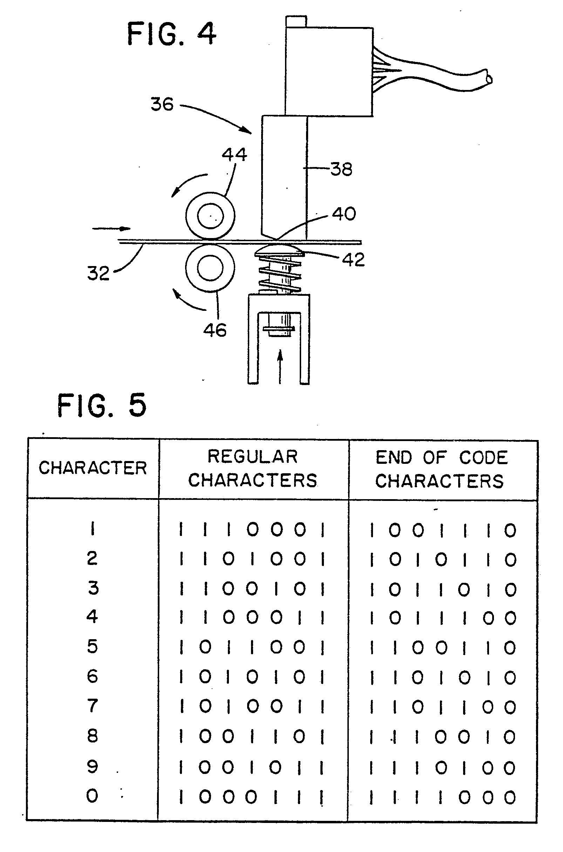

Referring now to Figure 1, there is shown a graphic representation of a first type of bar code symbols generally indicated by the number 18, each bar code symbol including a character bar code symbol 20 and a clock bar code symbol 22. The character bar code symbols 20 are arranged to be representative of each of the numerical characters 0—9 inclusive and form a data track when located on an item to be processed. Each of the bar code symbols 20 comprise a series of black 24 and white 26 bars of various thicknesses with each of the bar code symbols 20 and 22 being composed of seven equally wide data elements called modules, wherein each module may be white or black. In sensing the bar code symbols 20 and 22, each white module or space is assigned the value of 0 while a black module is assigned the value of 1 in a manner that is well-known in the art. It will be noted that the first and last bar of each character bar code symbol 20 is black, which characteristic is used in the control of the operation of a motor drive mechanism in a manner to be described hereinafter. By using binary bits for the black and white module representations, each bar code symbol 20 is arranged to provide a 7-bit pattern. Thus as shown in the table in Figure 5, the decimal or character 1 may be represented in the bar code symbols 20 of Figure 1 by the 7-bit pattern 1110001. In keeping with this format, the decimal 1 is comprised of a black bar of a 3-bit width, followed by a white bar or space of a 3-bit width and a 1-bit wide bar.

As previously described, associated with each of the character bar code symbols 20 (Figure 1) is a second bar code symbol 22 representing clock signals and comprising four equally spaced black bars 28 each of which function as a bit location reference for the corresponding bits of the character symbol 20 in a manner that will be described more fully hereinafter. This bar code arrangement taken in conjunction with its associated character bar code symbol 20 allows each coded character to be self-clocking and thereby independent of the speed of movement of a bar code label past a sensing member. While the bar code symbols 20 and 22 of Figure 1 are shown attached, it is obvious that they may be separated and still function for their intended purpose provided the code symbols 20 and 22 are aligned as shown in Figure 1, that is to say with the bars of the code symbol 22 aligned with the data elements or modules of the bar code symbol 20.

Referring now to Figure 2, there is shown a graphic representation of a second type of bar code symbols generally indicated by the numeral 29 which are used as the last or end-of-code character bar code symbol in the data track of a bar code label. Each of the end-of-code symbols 29 include a character bar code symbol 30 which is similar to its corresponding character bar code symbol 20 (Figure 1) in that the first bar is always black. The remaining bar positions 2—7 inclusive are inverted, that is, a 1 bit appears in the end-of-code character symbol 30 where a 0 bit appears in the same location in the corresponding character bar code symbol 20. This arrangement is shown in the table in Figure 5. It should be noted that in either case, each bar code symbol includes four binary bit 1's which characteristic is used as a parity check. The end-of-code bar code symbols 29 have an associated clock bar code symbol 31 (Figure 2) similar to the clock bar code symbol 22 (Figure 1) and which functions in the same manner.

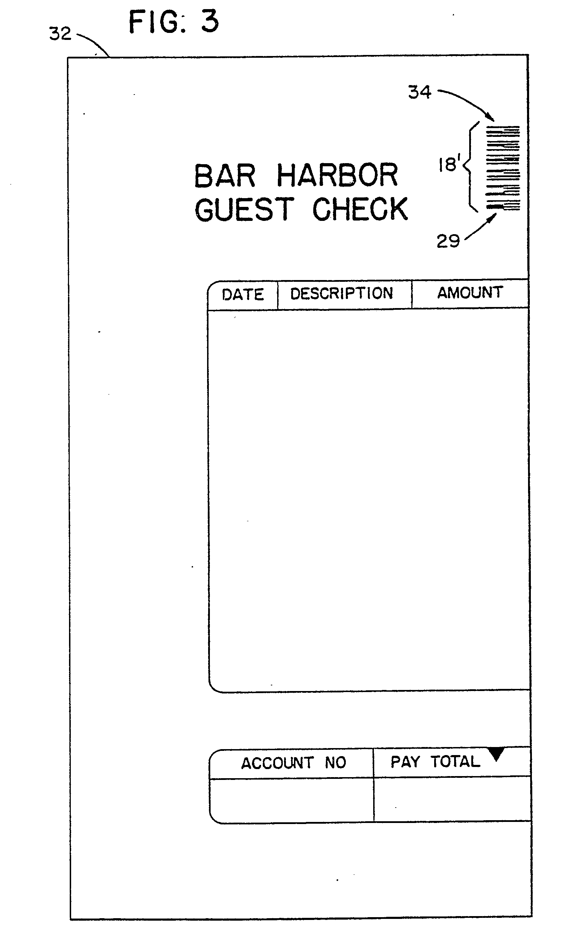

Referring now to Figure 3, there is shown a plan view of a record member 32 such as a check member which is issued by a motel or hotel and on which the customer charges are printed. Upon registration, the customer is assigned a check member 32 on which is printed a bar code label 34 which comprises a row 18' of bar code symbols 18 (Figure 1) together with an end-of-code bar code symbol 29 (Figure 2), the character bar code symbols 20, 30 of the row forming a data track and the clock bar code symbols 22, 31 forming a clocking track. The bar code label 34 comprises an account number. Any charges incurred by the customer are printed on the check by inserting the check into a printing mechanism located in a data terminal device and inserting the amount of the charge into the printing mechanism through a keyboard in a manner that is well-known in the art. A motor drive member in the terminal device will drive the check member 32 to a position adjacent the printing members in the printing mechanism which prints the amount of the charge on the check member 32. During an initial movement of the check member 32, a sensing member located in the terminal device will read the bar code label 34, enabling the terminal device to identify the customer's account number so that the amount being printed can be added to a running total of the entries on the check member. After verifying the account number, the terminal device will notify the operator to insert the amount of the charge into the keyboard after which the printing operation takes place. At check-out time, the total amount due is printed on the check for payment by the customer.

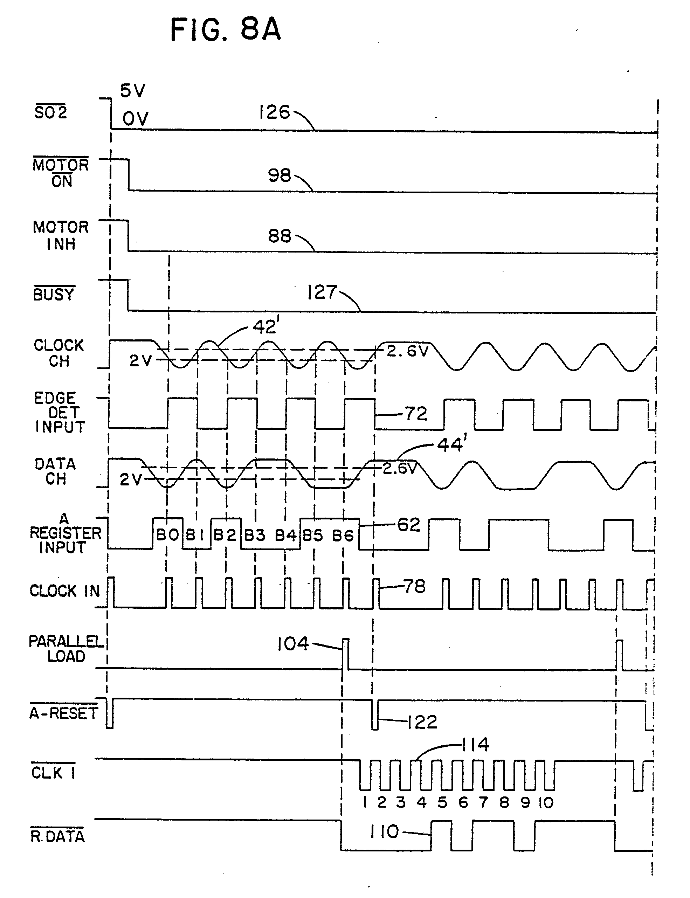

Referring now to Figure 4, there is shown a side view of a portion of the printing station showing the sensing assembly generally indicated by the numeral 36 which includes a sensing member 38 having a contact portion 40 in which are located a pair of off-set apertures (not shown) positioned adjacent the check member 32 (Figure 3). Each aperture in the contact portions 40 of the sensing member 38 contains a plurality of optical fibers, some of which are in communication with a light emitting diode (LED) while the remaining optical fibers are in communication with photo-transistors which in a manner well-known in the art will output an analog waveform signal 42' (Figure 8A) in response to the sensing of the clock channel 22 (Figure 1) of the bar code label 34 (Figure 3) and an analog signal 44' (Figure 8A) in response to the sensing of the data or character channel 20. The check member 32 is urged into engagement with the contact portion 40 of the sensing member 38 by a spring-urged compensator member 42. A pair of drive rollers 44, 46 engage the check member 32 and when operated by a motor drive member (not shown) will move the check member a predetermined distance to position a print line on the check member adjacent the printing mechanism enabling the printing mechanism to print the required data on the check member in a manner that is well-known in the art. For a fuller description of the sensing member 38 reference may be made to the previously mentioned related international application.

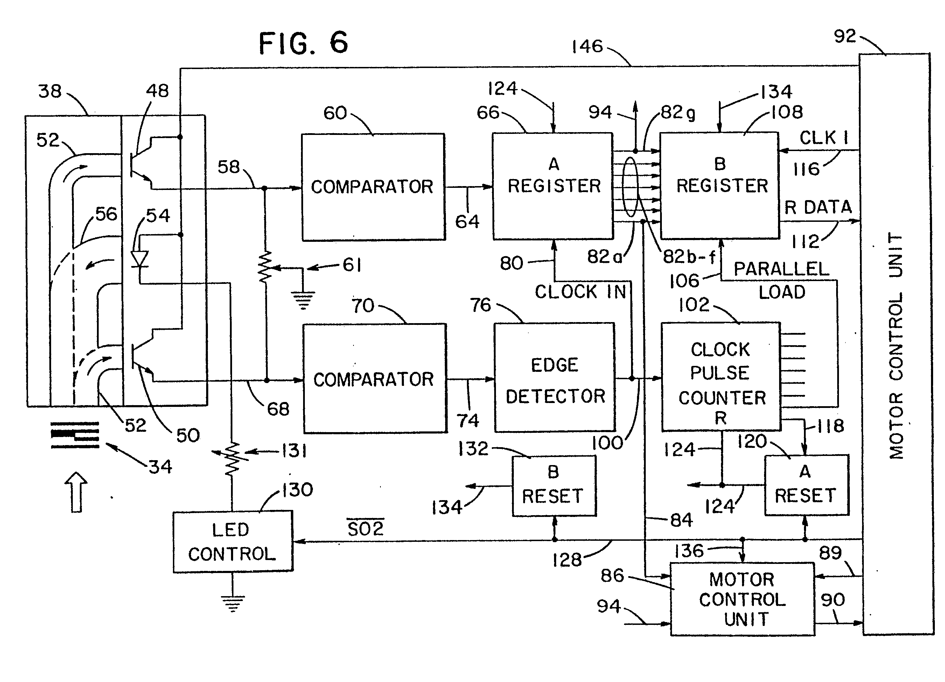

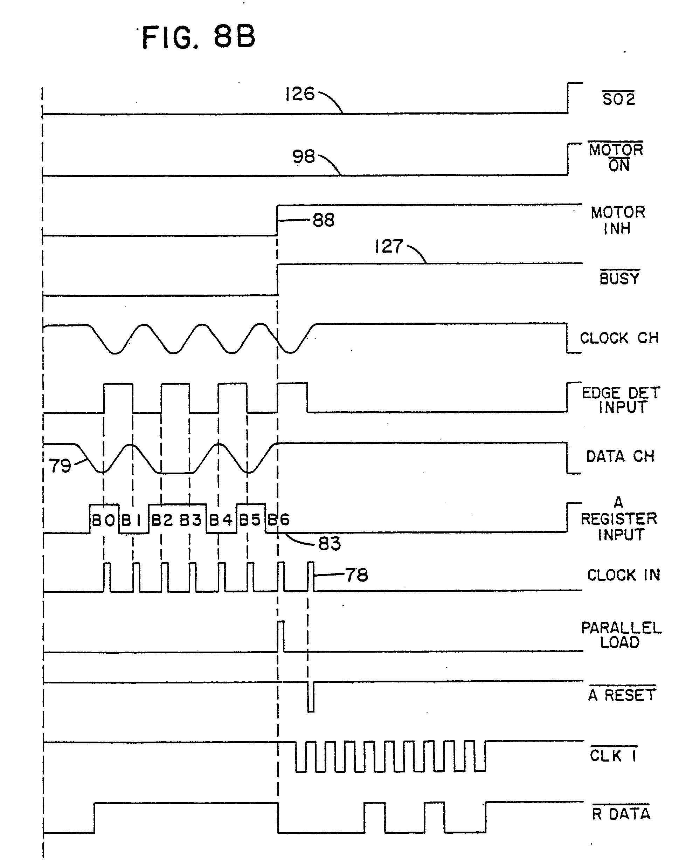

Referring now to Figure 6, there is shown a simplified block diagram of the sensing and motor control circuit employed in the present embodiment. As shown in Figure 6, the sensing member 38 includes a pair of photo-transistors 48, 50, each of which receives light rays through a plurality of optical fibers positioned in a channel 52, the light rays being reflected from a bar code label 34 located on the check member 32. The light source comprises a light-emitting diode 54 which, when energized, will transmit light rays through a plurality of optical fibers located in a channel 56 to the bar code label 34. The photo-transistor 48 will receive the light rays reflected from the bar code symbols 20, 30 representing the data characters, while the photo-transistor 50 will receive light rays reflected from the bar code symbols 22, 31 representing the clock signals. The channel 52 in the sensing member 38 positioned adjacent the clock bar code symbols 22, 31 is offset to the channel 52 positioned adjacent the data character bar code symbols 20, 30. With this arrangement, the photo-transistor 48 will generate the data analog waveform signal 44' (Figure 8A and 8B) out of phase with the clock analog waveform signal 42' generated by the photo-transistor 50.

In the present embodiment, the channel 52 positioned adjacent the character bar code symbols 20, 30 is offset to the channel positioned adjacent the clock bar code symbol 22, 31 by a distance equal to one-half the width of a module, which is represented by the black bar 28 (Figure 1) in the clock bar code symbols 22, 31.

The data or character analog signal 44' (Figure 8A and 8B) is transmitted from the photo-transistor 48 (Figure 6) over line 58 to a comparator 60 which digitizes the analog signal 44 to output the square wave signal 62 (Figure 8A) over line 64 to the input of a serial-to-parallel A shift register 66. Simultaneously with this operation, the photo-transistor 50 will generate the clock analog signal 42' (Figure 8A) which are transmitted over line 68 to a comparator 70 which digitizes the input analog signal to output the square wave signals 72 (Figure 8A) over line 74 to an edge detector 76. As indicated by the dotted lines in Figure 8A, the rising and falling edges of each of the square wave signals 72 occurs at the middle of the square wave data pulses 62 corresponding to the bit positions B0-B6 inclusive due to the offset location of the clock channel sensing aperture of the sensing member 38 with respect to the data channel sensing aperture.

The edge detector 76 (Figure 6) will, upon sensing the rising and falling edges of each of the square wave signals 72 (Figure 8A), generate a series of clock pulses 78 (Figure 8A) which are transmitted over line 80 to the A register 66, thereby loading the data signals 62 into the register. As the data signals 62 are loaded into the A register 66 under the control of the clock pulses 78, the signals 62 will appear on the output lines 82a-g inclusive of the register 66 with the first data bit B0 appearing on the line 82a, and the seventh data bit B6 appearing on the output line 82g. As previously described, the first bit B0 of each of the bar code symbols 20 and 30 (Figure 1 and 2) is always black, thereby representing the binary bit 1. As this signal appears on the output line 82a of the register 66, the signal will be transmitted over line 84 to a motor control unit 86 which receives over line 89 the $\overline{\text{MOTOR ON}}$ signal 98 (Figure 8A and 8B) which is low when the motor drive mechanism is operating.

If the bar code symbol being sensed by the sensing member 38 is an end-of-code symbol 29 (Figure 2) in which the last bit position is always a space or white bar there is produced a low signal 83 (Figure 8B) on line 82g. This signal is inverted in a manner to be described hereinafter and appears as a high signal on the output line 94 (Figure 6) and is transmitted to the motor control unit 86. The control unit 86 in response to receiving the high signal over line 84 from line 82a and the high signal over line 94 raises the Motor Inhibit signal 88 (Figure 8B) over line 90 to a motor control unit 92, resulting in the stopping of the motor drive mechanism in the terminal device, thereby disabling the drive rollers 44, 46. Stopping of the drive mechanism at this time allows the terminal device to decode the data transmitted from the sensing member 38 to verify the decode account No. and to indicate to the operator to insert the data that is to be printed on the check member 32 into the terminal device.

The clock pulses 78 (Figure 8A) generated by the edge detector 76 are also transmitted over line 100 (Figure 6) to a clock pulse counter 102 which outputs a parallel load signal 104 (Figures 8A and 8B) upon the occurrence of the seventh clock pulse 78. The signal 104 is transmitted over line 106 to a ten bit parallel-to-serial B shift register 108 loading the data bits 62 (Figure 8A) appearing on the output lines 82a-g inclusive of the A register 66 into the B register 108. The data signals 62 (Figure 8A) stored in the B register 108 are subsequently clocked out as R Data signals 110 (Figure 8A) over line 112 to the motor control unit 92 and then subsequently to another part of the terminal device in response to receiving clock in (CLKI) pulses 114 (Figure 8A) from the motor control unit 92 over line 116. During the time the R Data signals 110 are being strobed out of the B register 108 by the motor control unit 92 over line 112, the data signals 62 (Figure 8A) representing the next bar code symbol 18 (Figure 1) sensed by the sensing member 38 are being loaded into the register 66 in the manner that will now be described.

The clock pulse counter 102 (Figure 6) will output a high pulse over line 118 upon counting the eighth clock pulse 78 (Figure 8A) transmitted from the edge detector 76 over line 100. The pulse appearing on line 118 is transmitted to an A reset circuit 120 which outputs a control signal 122 (Figure 8A) over line 124 to reset the A register 66 and the clock pulse counter 102 enabling the A register 66 to accept the data signals 62 being transmitted from the comparator 60 over line 64 as a result of sensing the next bar code symbol 18 (Figure 1). It will thus be seen that the sensing system disclosed in Figure 6 will output data in binary form in accordance with the sensing of the bar code symbols of the bar code label 34 in which the data signals 62 are clocked by the clock signals 78 which occurs with the generation of the data signals 62. Thus the data being outputted by the sensing member is independent of the speed of the label past the sensing member 38.

As shown in Figures 6 and 8A a normally high reset $\overline{SO2}$ signal 126 is outputted over line 128. Prior to the sensing of a label 34, the signal $\overline{SO2}$ is dropped, which signal is transmitted over line 128 to a LED control circuit 130 (Figure 6) which outputs an energizing pulse through an adjustable potentiometer 131 to the LED 54 resulting in the energizing of the LED 54 thereby initiating a new sensing operation. The signal $\overline{SO2}$ is also transmitted over line 136 to the motor control unit 86 conditioning the unit to be operated. The signal $\overline{SO2}$ is also transmitted to the A reset circuit 120 and a B reset circuit 132 enabling the circuit for operation. After the completion of the reading of the label 34 on the record member 32 (Figure 3), the signal $\overline{SO2}$ is raised deenergizing the LED 54. The high signal $\overline{SO2}$ is also transmitted to the B reset circuit 132 which outputs a reset pulse over line 134 to the B register 108, resetting the register for the reading of the next label. The signal $\overline{SO2}$ is also transmitted over line 136 to the motor control unit 86 pulling down the Motor Inhibit signal 88 enabling the motor drive mechanism to move the check member to a printing position if required or if the printing operation has been completed, conditioning the system for the sensing of a bar code label 34 (Figure 3) on a new check member. The dropping of the signal 88 results in the dropping of a BUSY signal 127 indicating the operation of the motor. As shown in Figure 6, a balance control 61 is utilized to adjust the output voltage levels of the photo-transistors 48 and 50.

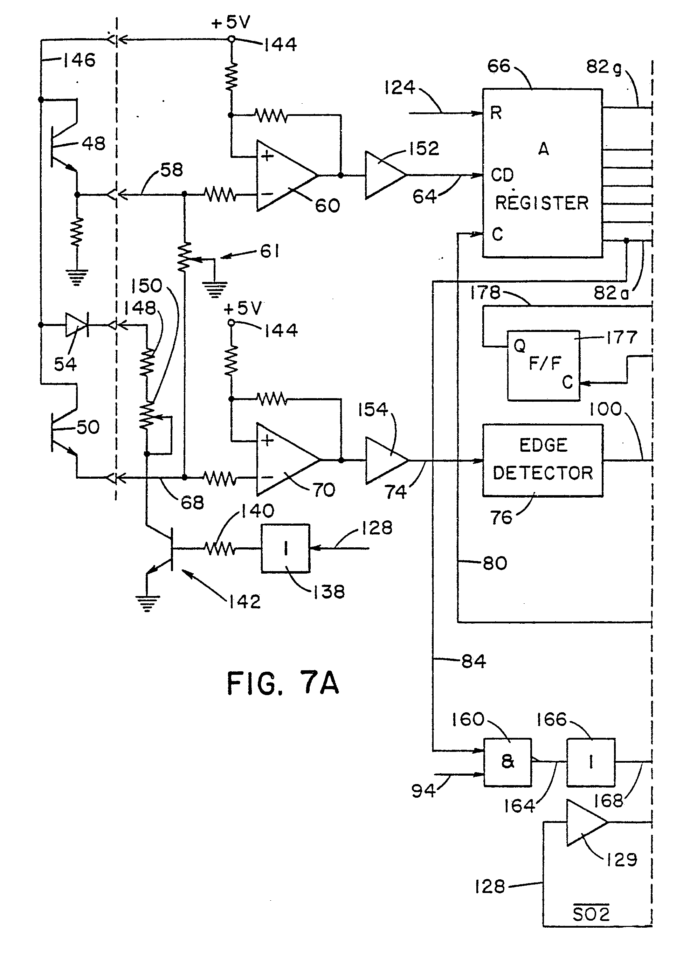

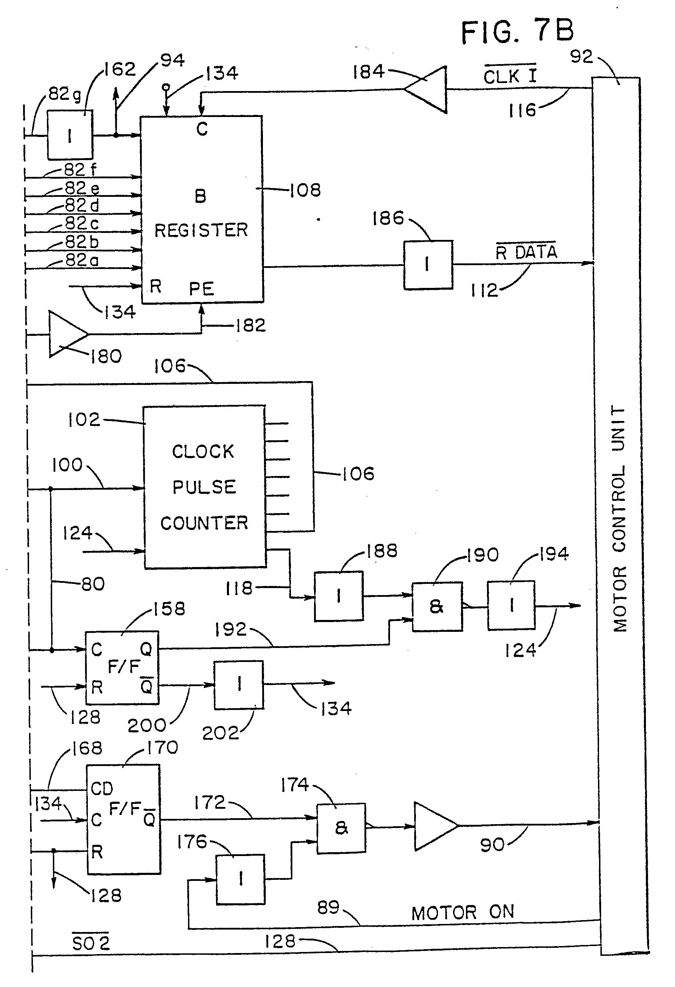

Referring now to Figures 7A and 7B, there is shown a more detailed schematic diagram of the circuit shown in Figure 6. As shown in Figure 7A, the initiating signal $\overline{SO2}$ which is generated over line 128 from the motor control unit 92 (Figure 7B) is transmitted to an inverter 138 which outputs the inverter signal through a dropping resistor 140 switching a transistor 142 into a state of conduction, thereby grounding a 5 volt power supply 144 (Figure 7A) through line 146, the light emitting diode (LED) 54 and through a resistor and a potentiometer 148, 150, enabling the diode 54 to illuminate the bar code label 34 through the optical fibers positioned in the channel 56 (Figure 6). The light reflected from the character bar code symbols 20, 30 (Figure 1) is transmitted through the optical fibers positioned in the channel 52 (Figure 6) to the photo-transistor 48 which outputs the analog signal 44' (Figure 8A) over line 58 to the inverting input of the standard linear integrated comparator 60 which may be of any well-known type such as Part No. LM3900 sold by the National Semiconductor Corporation of Santa Clara, California.

The analog waveform signal 44' (Figure 8A) is shaped by the comparator 60 to output the squared waveform signal 62 by switching the output voltage when the analog signal reaches fixed voltage levels such as 2 volts and 2.6 volts as shown in the waveform signal 44' (Figure 8A). The squared waveform signal 62 is transmitted through a driver 152 and over line 64 to the 8-bit A shift register 66, the signal 62 being clocked into the A register by the clock pulses 78 (Figure 8A) appearing on the output line 100 of the edge detector 76 and transmitted to the clock input of the A register 66 over line 80. The serial-to-parallel shift register 66 is commercially available from the Texas Instruments Corporation of Dallas, Texas, as Part No. SN74LS164.

In a similar manner, the photo-transistor 50 receiving light reflected from the clock bar code symbols 22, 31 (Figure 1) will output the analog signal 42' (Figure 8A) over line 68 to the inverting input of the comparator 70 which is of the same construction as comparator 60 and which outputs the squared waveform signal 72 in a manner similar to the operation of the comparator 60. The squared waveform signal 72 which is outputted from the comparator 70 is transmitted to a driver 154 and over line 74 to the edge detector 76 which may take the form of any conventional arrangement such as a pair of monostable multi-vibrators which are commercially available from Texas Instruments Corporation of Dallas, Texas. The edge detector 76 will output the clock pulses 78 (Figure 8A) upon the occurrence of the rising and falling edges of the squared waveform signal 72 over line 100 to the clock pulse counter 102 which may be comprised of an 8-bit shift register which is commercially available from the Texas Instruments Corporation as part no. SN74LS164. The clock pulses 78 appearing on line 100 are also transmitted over line 80 to the clock input of the shift register 66 in the manner described previously for loading the signals 62 into the register and also to the clock input of a flip-flop 158 (Figure 7B) which generates reset signals in a manner to be described hereinafter.

The clocking of the squared waveform signal 62 representing data which is used to identify the character bar code symbol being sensed by the sensing member 38 into the A register 66 under the control of the clock pulses 78 results in the bit signals B0-B6 inclusive (Figure 8A) appearing on the output lines 82a-82g inclusive of the A register 66. The first bit signal B0 (Figure 8A) is always high, and this signal when appearing on the output line 82a is transmitted over line 84 (Figure 7A) to one input of a NAND gate 160 whose other input is connected over line 94 to the output of an inverter 162 connected in line 182g. As described previously, the last bit B6 of the waveform 62 associated with each of the character bar code symbols 20 in Figure 1 is always high, which signal will appear on the output line 94 as low because of the inverter 162 resulting in the NAND gate 160 outputting a high signal over its output line 164. When the sensing member 38 senses the end-of-code character 29 (Figure 2) in which the last bit position is always a space, the bit signal B6 (Figure 8B) will be inverted by the inverter 162 which outputs a high signal over line 94 enabling the NAND gate 160 to output a low signal on its output line 164 to the inverter 166 which in turn outputs a high signal over line 168 to the CD input of a flip-flop 170. The flip-flop 170 will output a low signal on its $\bar{Q}$ output over line 172 to one input of a NAND gate 174 whose other input receives a high signal from an inverter 176 on whose input appears the $\overline{\text{MOTOR ON}}$ signal 98 (Figure 8A) which is normally low when the motor is running. The output signal 88 (Figure 8B) of the NAND gate 174 transmitted through a driver 175 and over line 90 to the Motor Control unit 92 will inhibit the operation of the motor drive mechanism (not shown) indicating that the bar code label 34 on the member 32 (Figure 3) has been read. The flip-flops 158 and 170 (Figure 7B) are commercially available from the Motorola Corporation of Phoenix, Arizona as Part No. MC14013.

The outputting of the clock pulses 78 (Figure 8A) over line 100 to the clock pulse counter 102 (Figure 7B) results in outputting of the pulse 104 (Figure 8A) over line 106 upon the occurrence of the inputting of the seventh clock pulse 78 into the counter 102. The pulse 104 is transmitted over line 106 to the clock input of a flip-flop 177 (Figure 7A) toggling the flip-flop to output a high signal for a period of 1 sec. on its Q output line 178 which signal is transmitted through a driver 180 to the PE input of the B register 108 on whose input lines 82a-82g inclusive appear the waveform signals 62 (Figure 8A) representing in binary form the character sensed by the sensing member 38. The B register 108 is comprised of a pair of parallel-to-serial five bit shift registers. Upon the subsequent generation of the clock-in $\overline{(\text{CLKI})}$ pulses 114 (Figure 8A) over line 116 (Figure 7B) by the motor control unit 92 and through the driver 184, the waveform signal 62 is outputted over line 112 in serial form through an inverter 186 which results in the R Data waveform 110 (Figure 8A) being outputted to the motor control unit 92 for processing by the terminal device. This sequence of events will occur for the sensing of each character bar code symbol 20 (Figure 1) by the sensing member 38. The B register 108 is commercially available from the Texas Instruments Corporation of Dallas, Texas as Part No. SN74LS96. The flip-flop 177 is available as Part No. SNLS221.

Upon receiving the eighth clock pulse 78 over line 100 from the edge detector 76, the clock pulse counter 102 (Figure 7B) will output a high signal on the output line 118 which signal is inverted by an inverter 188 and transmitted to one input of a NAND gate 190 on whose other input appears the low signal over line 192 from the Q output of the flip-flop 158. The NAND gate 190 will be enabled to output a high signal to an inverter 194 which outputs the low $\overline{\text{A RESET}}$ signal 122 (Figure 8A) over line 124 to the reset input of the A register 66 resetting the register to enable the next character waveform signal 62 to be entered. The $\overline{\text{A RESET}}$ signal 122 is also transmitted over line 124 to the clock pulse counter 102 resetting the counter. It will thus be seen that the circuit is in condition to process each of the waveform signals 44' generated by the sensing member 38 until the end-of-code character signal 79 (Figure 8B) is generated signifying the end of the bar code label 34 resulting in the disabling of the motor in the manner described previously. The clock pulse counter 102 is commercially available as the 8-bit shift register Part No. SN74LS164 which may be the same as that of the A register 66.

After all the data generated by the operation of the sensing member 38 has been processed by the terminal device, the motor control unit 92 will raise the $\overline{\text{SO2}}$ signal 126 (Figure 8A) over line 128 through the driver 129 (Figure 7A) to the reset input of the flip-flop 170. The flip-flop 170 will output a high signal over line 172 which enables the NAND gate 174 to output the low motor inhibit signal 88 (Figure 8A) thereby enabling the energizing of the motor drive mechanism to occur resulting in the driving of the check member 32 (Figure 4) towards a printing position by the operation of the drive wheels 44 and 46. The raises $\overline{\text{SO2}}$ signal 126 is also transmitted over line 128 to the flip-flop 158 (Figure 7B) enabling flip-flop 158 resulting in a high signal appearing on the $\overline{Q}$ output line 200 which signal is inverted by an inverter 202 and transmitted over line 134 to the reset input of the B register 108 resetting the register, thereby conditioning the circuit for a new processing operation.

## Claims

1. A code sensing system comprising a record member (32) carrying code symbols incorporating a plurality of symbols of a first type (18) and an end symbol of a second type (29), each of these symbols including clock elements (22, 31) forming part of a clocking track and the symbols of the first type including character representing code elements (20) forming part of a data track, and sensing means (38) for sensing said data track and said clocking track and generating first electrical signals (44') representing said data track and second electrical signals (42') representing said clocking track, characterized in that the end symbol of the second type also consists of character representing code elements (30) and said clock elements, said system being further characterized by driving means (44, 46) for driving said record member (32) past said sensing means (38), and logic means (160, 170, 174) operative to disable said driving means (44, 46) in response to the sensing of said character representing code elements of said end symbol (29) by said sensing means (38).

2. A system according to claim 1, characterized in that said sensing means (38) includes first detector means (48, 52) for sensing said data track and generating said first electrical signals (44'), and second detector means (50, 52) for sensing said clocking track and generating said second electrical signals (42'), said first and second detector means being arranged such that said first electrical signals are generated out of phase with said second electrical signals.

3. A system according to claim 2, characterized in that said first and second detector means (48, 52) are arranged to generate said first and second signals in analog form, said system being further characterized by digitizing means (60, 70) arranged to convert said first and second analog signals into first (62) and second (72) square wave signals respectively, in which leading and trailing edges of said first square wave signals (62) occur between leading and trailing edges of said second square wave signals (72).

4. A system according to claim 3, characterized by first storage means (66) for storing said first square wave signals (62), and pulse generator means (76) coupled to said first storage means (66) and responsive to the leading and trailing edges of said second square wave signals (72) for generating clock pulses (78) for enabling said first storage means to store said first square wave signals.

5. A system according to claim 4, characterized by second storage means (108) coupled to the output of said first storage means (66), and counter means (102) coupled to said pulse generator means (76) for counting clock pulses generated in respect of each sensed code symbol and arranged to output a control pulse (104) upon reaching a count representing the next to the last clock pulse generated in respect of a sensed code symbol for enabling said second storage means (108) to store the data output of said first storage means (66).

6. A system according to claim 5, characterized by reset means (120) coupled to said first storage means (66) and operative to reset said first storage means, said counter means (102) being coupled to said reset means (120) for operating said reset means upon counting the last clock pulse generated by said pulse generator means (76) in respect of a sensed code symbol.

7. An information bearing member carrying a row of code symbols adapted to be scanned by energy applied thereto, said row comprising a plurality of first code symbols (18) and a second code symbol (29) at one end of the row, each of these symbols (18, 29) comprising a first array (20, 30) of parallel bars of varying widths and a second array (22, 31) of parallel bars of equal widths in which alternate bars of each array are of different reflectivities, characterized in that the first and last bars of said first array of each of said first symbols (18) are always of the same reflectivity and the first and last bars of said first array of said second symbol (29) are of different reflectivities.

## Patentansprüche

1. Codeabtastsystem mit einem Aufzeichnungsträger (32), der Codesymboleträgt, die eine Vielzahl von Symbolen eines ersten Typs (18) und ein Endsymbol eines zweiten Typs (29) aufweisen, wobei jedes dieser Symbole Taktelemente (22, 31) besitzt, die Teil einer Taktspur bilden, und die Symbole des ersten Typs zeichendarstellende Codeelemente besitzen, die Teil einer Datenspur bilden, und mit Abtastmitteln (38) zum Abtasten der Datenspur und der Taktspur und zum Erzeugen ersterelektrischer Signale (44'), die die Datenspur darstellen, und zweiter elektrischer Signale (42'), die die Taktspur darstellen, dadurch gekennzeichnet, dass das Endsymbol des zweiten Typs auch aus zeichendarstellenden Codeelementen (30) besteht, sowie aus den Taktelementen, wobei das System ferner gekennzeichnet ist durch Antriebsmittel (44, 46) zum Antreiben des Aufzeichnungsträgers (32) vorbei an den Abtastmitteln (38), und logische Mittel (160, 170, 174), die arbeiten, um die Antriebsmittel (44, 46) unter Ansprechen auf das Abtasten der zeichendarstellenden Codeelemente des Endsymbols (29) durch die Abtastmittel (38) abzuschalten.

2. System nach Anspruch 1, dadurch gekennzeichnet, dass die Abtastmittel (38) erste Detektormittel (48, 52) zur Abtastung der Datenspur und zur Erzeugung der ersten elektrischen Signale (44'), und zweite Detektormittel (50, 52) zur Abtastung der Taktspur und zur Erzeugung der zweiten elektrischen Signale (42') besitzen, wobei die ersten und zweiten Detektormittel derart angeordnet sind, dass die ersten elektrischen Signale ausser Phase mit den zweiten elektrischen Signale erzeugt werden.

3. System nach Anspruch 2, dadurch gekennzeichnet, dass die ersten und zweiten Detektormittel (48, 52) angeordnet sind, um die ersten und zweiten Signale in Analogform zu erzeugen, wobei das System ferner gekennzeichnet ist, durch Digitalisierungsmittel (60, 70), die angeordnet sind, um die ersten und zweiten Analogsignale in erste (62) bzw. zweite (72) Rechtecksignale umzuwandeln, wobei die Anstiegs- und Abfallflanken der ersten Rechtecksignale (62) zwischen den Anstiegs- und Abfallflanken der zweiten Rechtecksignale (72) auftreten.

4. System nach Anspruch 3, gekennzeichnet durch erste Speichermittel (66) zur Speicherung der ersten Rechtecksignale (62) und Impulsgeneratormittel (76), die mit den ersten Speichermittel (66) gekoppelt sind, und auf die Anstiegs- und Abfallflanken der zweiten Rechtecksignale (72) zur Erzeugung von Taktimpulsen (78) ansprechen, wodurch die ersten Speichermittel für eine Speicherung der ersten Rechtecksignale aktiviert werden.

5. System nach Anspruch 4, gekennzeichnet durch mit dem Ausgang der ersten Speichermittel (66) gekoppelte zweite Speichermittel (108) und Zählermittel (102), die mit den Impulsgeneratormitteln (76) gekoppelt sind zur Zählung von bezüglich jedes abgetasteten Codesymbols erzeugten Impulsen, und die angeordnet sind zur Ausgabe eines Steuerimpulses (104) bei Erreichen einer Zählung, die den vorletzten bezüglich eines abgetasteten Codesymbols erzeugten Taktimpuls darstellt, um die zweiten Speichermittel (108) zur Speicherung der Datenausgangssignale der ersten Speichermittel (66) zu aktivieren.

6. System nach Anspruch 5, gekennzeichnet durch Rückstellmittel (120), die mit den ersten Speichermitteln (66) gekoppelt sind und zur Rückstellung der ersten Speichermittel dienen, wobei die Zählmittel (102) mit den Rückstellmitteln (120) zu deren Betätigung bei Erreichen der Zählung des letzten von den Impulsgeneratormitteln (76) bezüglich eines abgetasteten Codesymbols erzeugten Taktimpulses gekoppelt sind.

7. Informationsträger, der eine Reihe von Codesymbolen trägt, die geeignet sind, durch auf sie angewandte Energie abgetastet zu werden, wobei die Reihe eine Vielzahl erster Codesymbole (18) und ein zweites Codesymbol (29) an einem Ende der Reihe aufweist, wobei jedes dieser Symbole (18, 29) aus einer ersten Anordnung (20, 30) paralleler Striche mit variierenden Breiten und einer zweiten Anordnung (22, 31) paralleler Striche gleicher Breite bestehen, bei denen alternierende Striche jeder Anordnung unterschiedliche Reflektivität haben, dadurch gekennzeichnet, dass der erste und letzte Strich der ersten Anordnung jedes der ersten Symbole (18) immer von der gleichen Reflektivität sind und der erste und letzte Strich der ersten Anordnung des zweiten Symbols (29) unterschiedliche Reflektivitäten haben.

**Revendications**

1. Système de détection de code comprenant un élément d'enregistrement (32) portant des symboles de code renfermant plusieurs symboles d'un premier type (18) et un symbole de fin d'un second type (29), chacun de ces symboles comprenant des éléments d'horloge (22, 31) faisant partie d'une piste d'horloge et les symboles du premier type comprenant des éléments de code (20) représentant des caractères, faisant partie d'une piste de données, et des moyens de détection (38) destinés à détecter ladite piste de données et ladite piste d'horloge et à générer des premiers signaux électriques (44') représentant ladite piste de données et des seconds signaux électriques (42') représentant ladite piste d'horloge, caractérisé en ce que le symbole de fin du second type comprend également des éléments de code (30) représentant des caractères et lesdits éléments d'horloge, ledit système étant en outre caractérisé par des moyens d'entraînement (44, 46) destinés à entraîner ledit élément d'enregistrement (32) devant lesdits moyens de détection (38), et des moyens logiques (160, 170, 174) ayant pour fonction d'invalider lesdits moyens d'entraînement (44, 46) en réponse à la détection desdits éléments de code représentant des caractères dudit symbole de fin (29) par lesdits moyens de détection (38).

2. Système selon la revendication 1, caractérisé en ce que lesdits moyens de detection (38) comprennent des premiers éléments de détection (48, 52) destinés à détecter ladite piste de données et à produire lesdits premiers signaux électriques (44'), et des seconds éléments de détection (50, 52) destinés à détecter ladite piste d'horloge et à produire lesdits seconds signaux électriques (42'), lesdits premiers et seconds éléments de détection étant disposés de manière que lesdits premiers signaux électriques soient produits en déphasage par rapport auxdits seconds signaux électriques.

3. Système selon la revendication 2, caractérisé en ce que lesdits premiers et seconds éléments de détection (48, 52) sont disposés de manière à produire lesdits premiers et seconds signaux sous une forme analogique, ledit système étant en outre caractérisé par des moyens (60, 70) de mise en forme numérique conçus pour convertir lesdits premiers et seconds signaux analogiques en premiers (62) et seconds (72) signaux à onde carrée, respectivement, dans lesquels des flancs avant et arrière desdits premiers signaux (62) à onde carrée apparaissent entre des flancs avant et arrière desdits seconds signaux (72) à onde carrée.

4. Système selon la revendication 3, caractérisé par un premier élément de mémorisation (66) destiné à mémoriser lesdits premiers signaux (62) à onde carrée, et un générateur d'impulsions (76) couplé audit premier élément de mémorisation (66) et réagissant aux flancs avant et arrière desdits seconds signaux (72) à onde carrée en produisant des impulsions d'horloge (78) pour permettre audit premier élément de mémorisation de mémoriser lesdits premiers signaux à onde carrée.

5. Système selon la revendication 4, caractérise par un second élément de mémorisation (108) couplé à la sortie dudit premier élément de mémorisation (66), et un compteur (102 couplé audit générateur (76) d'impulsions pour compter des impulsions d'horloge produites pour chaque symbole de code détecté, et monté de manière à produire une impulsion de commande (104) lorsqu'il atteint un compte représentant l'avant-dernière impulsion d'horloge produite pour un symbole de code détecté afin de permettre audit second élément de mémorisation (108) de mémoriser les données de sortie dudit premier élément de mémorisation (66).

6. Système selon la revendication 5, caractérisé par un élément (120) de repositionnement couplé audit premier élément de mémorisation (66) et destiné à repositionner ledit premier élément de mémorisation, ledit compteur (102) étant couplé audit élément de repositionnement (120) afin de commander cet élément de repositionnement au comptage de la dernière impulsion d'horloge produite par ledit générateur (76) d'impulsions pour un symbole de code détecté.

7. Elément de support d'information portant une rangée de symboles de code conçu pour être exploré par application d'énergie, ladite rangée comprenant plusieurs premiers symboles de code (18) et un second symbole de code (29) à une extrémité de la rangée, chacun de ces symboles (18, 29) comprenant une première rangée (20, 30) de bâtonnets parallèles de diverses largeurs et une seconde rangée (22, 31) de bâtonnets parallèles de même largeur, les bâtonnets alternés de chacune des rangées ayant des coefficients de réflexion différents, caractérisé en ce que les premier et dernier bâtonnets de ladite première rangée de chacun desdits premiers symboles (18) sont toujours du même coefficient de réflexion et les premier et dernier bâtonnets de ladite première rangée dudit second symbole (29) ont des coefficients de réflexion différents.

# FIG. 1

# FIG. 2

# FIG. 3

32

34

BAR HARBOR
GUEST CHECK

18'

29

| DATE | DESCRIPTION | AMOUNT |
|------|-------------|--------|
|  |  |  |

| ACCOUNT NO | PAY TOTAL |
|------------|-----------|
|  |  |

2

## FIG. 4

## FIG. 5

| CHARACTER | REGULAR CHARACTERS | | | | | | | END OF CODE CHARACTERS | | | | | | |
|:---:|:---:|:---:|:---:|:---:|:---:|:---:|:---:|:---:|:---:|:---:|:---:|:---:|:---:|:---:|
| 1 | 1 | 1 | 1 | 0 | 0 | 0 | 1 | 1 | 0 | 0 | 1 | 1 | 1 | 0 |
| 2 | 1 | 1 | 0 | 1 | 0 | 0 | 1 | 1 | 0 | 1 | 0 | 1 | 1 | 0 |
| 3 | 1 | 1 | 0 | 0 | 1 | 0 | 1 | 1 | 0 | 1 | 1 | 0 | 1 | 0 |
| 4 | 1 | 1 | 0 | 0 | 0 | 1 | 1 | 1 | 0 | 1 | 1 | 1 | 0 | 0 |
| 5 | 1 | 0 | 1 | 1 | 0 | 0 | 1 | 1 | 1 | 0 | 0 | 1 | 1 | 0 |
| 6 | 1 | 0 | 1 | 0 | 1 | 0 | 1 | 1 | 1 | 0 | 1 | 0 | 1 | 0 |
| 7 | 1 | 0 | 1 | 0 | 0 | 1 | 1 | 1 | 1 | 0 | 1 | 1 | 0 | 0 |
| 8 | 1 | 0 | 0 | 1 | 1 | 0 | 1 | 1 | 1 | 1 | 0 | 0 | 1 | 0 |
| 9 | 1 | 0 | 0 | 1 | 0 | 1 | 1 | 1 | 1 | 1 | 0 | 1 | 0 | 0 |
| 0 | 1 | 0 | 0 | 0 | 1 | 1 | 1 | 1 | 1 | 1 | 1 | 0 | 0 | 0 |

FIG. 6

FIG. 7A

FIG. 7B

MOTOR CONTROL UNIT

# FIG. 8A

# FIG. 8B